(19) Europäisches Patentamt
European Patent Office
Office européen des brevets

(11) **EP 2 034 436 A1**

(12) **EUROPEAN PATENT APPLICATION**

(43) Date of publication:
**11.03.2009 Bulletin 2009/11**

(51) Int Cl.:
*G06T 5/00* (2006.01)       *G06T 11/00* (2006.01)

(21) Application number: **07301342.7**

(22) Date of filing: **06.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Zhu, Lihua**
**Beijing 100085 (CN)**

• **Zhu, Guangfei**
**Beijing 100085 (CN)**
• **Zhang, Hui**
**Beijing 100085 (CN)**
• **Wang, Charles**
**Beijing 100085 (CN)**

(74) Representative: **Rittner, Karsten**
**Deutsche Thomson OHG**
**European Patent Operations**
**Karl-Wiechert-Allee 74**
**30625 Hannover (DE)**

(54) **Method for non-photorealistic rendering**

(57)     The invention is related to non-photorealistic rendering (NPR). It is aimed on improving edge processing in the context of NPR of images.

The inventive method for non-photorealistic rendering comprises determining a feature map of the input image and edge processing the input image under guidance of the feature map.

Through guidance of the feature map processing of real edges is ensured while processing of artificial edges is avoided. This results in improved edge processing.

Fig. 1

EP 2 034 436 A1

**Description**

Background

The invention is related to non-photorealistic rendering (NPR) of images.

NPR comprises stylization techniques for transforming natural images and/or videos into painterly styled or cartoon styled images and/or videos. In this application, we will use the term image as referring to a still image as well as an image frame in a video sequence.

Primarily, stylization was applied for artistic purposes only. But, as styled images comprise less details and/or larger areas of uniform pixel stylization is used for efficient visual communication, also. A stylized image comprises a smaller high frequency portion than the corresponding natural image and therefore it is better compressible. A decoded stylized image comprises less annoying artefacts than the corresponding natural image compressed with the same compression rate.

In recent years, stylization techniques has been applied in making movies such as "waking life" (2001) and "a scanner darkly" (2006) from natural video which resulted in cartoon like animations from natural video.

A key step in stylizing a natural video into a cartoon like animation is edge processing. Edge processing may be used to highlight contours, to determine regions of interest (ROI) or for segmenting an image into different areas for individually processing the areas further.

Edge processing is subject to conflicting requirements: At one hand it is desirable to avoid processing of artificial edges. On the other hand omission of a real edge from processing has to be avoided, too. But, avoidance of artificial edges normally comes along with omission of tiny or interrupted real edges. And maintenance of every real edge is subject to introduction of artificial edges.

Therefore, in dependence on the application, edge processing techniques are more committed to the one or the other requirement.

In applications requiring very high visual accuracy as generation of the cartoon like animation movies mentioned above, it is common to reprocess results from automatic edge processing manually in order to achieve a result which is sufficiently attractive for mass market publicity.

Thus, there is a need for further improvement of edge processing in the context of non-photorealistic rendering.

Invention

This is achieved by a method for non-photorealistic rendering of an input image wherein the method comprises the features of claim 1.

Said method comprises determining a feature map of the input image and edge processing the input image under guidance of the feature map.

Through guidance of the feature map processing of real edges is ensured while processing of artificial edges is avoided. This results in improved edge processing.

Preferably, determining the feature map comprises determining a salience map, determining a skin-colour map and combining the salience map and the skin-colour map.

By help of the skin-colour map and the salience map important real edges which are salient and/or limit ROIs can be processed differently. This helps retaining real edges while avoiding artificial edges.

It is further preferred that the method further comprises abstracting the input image and quantizing a combined image under guidance of the feature map wherein edge processing comprises detecting edges in the input images and forming the combined image by overlaying the abstracted image and the edge detected image under guidance of the feature map.

This results in a visually attractive cartoon image.

Preferably, overlaying is achieved by multiplying a pixel value in the abstracted image with the value of the respective pixel in the edge detected image. This allows for parallel processing.

Advantageously, abstracting the input image comprises applying a bilateral filter. This improves the cartooning effect on the input image.

It is further preferred that detecting edges in the input image comprises convolving the input image with a Laplacian-of-Gaussian operator; dilating the convolved input image and eroding the dilated input image.

Usage of the Laplacian-of-Gaussian operator allows for efficient use of graphic processing units (GPU).

In another preferred embodiment detecting edges in the input image comprises determining edge tangent flow and applying a Difference-of-Gaussian operator under guidance of the determined edge tangent flow.

Within in this another preferred embodiment, the morphological operations of dilation and erosion are not necessary.

In yet another preferred embodiment detecting edges in the input image comprises deriving edges from Gaussian scale space.

This generates edges with good coherence.

Additionally, it is preferred that determining the feature map comprises determining a first stage image by determining for pixels in the input image whether their chrominance values are within predefined intervals, regulating density and luminance of the first stage image and geometrically correcting the regulated image.

This results in an accurate determination of skin-coloured areas in the input image.

Furthermore, determination of the feature map preferably also comprises filtering the input image with a filter selectively for a first feature; filtering the input image with a filter selectively for a second feature and combining the filtering results.

This helps establishing a feature independent saliency map.

Drawing

Exemplary embodiments of the invention are illustrated in the drawings and are explained in more detail in the following description.

In the figures:

Fig. 1    shows an exemplary embodiment of a method for non-photorealistic rendering;

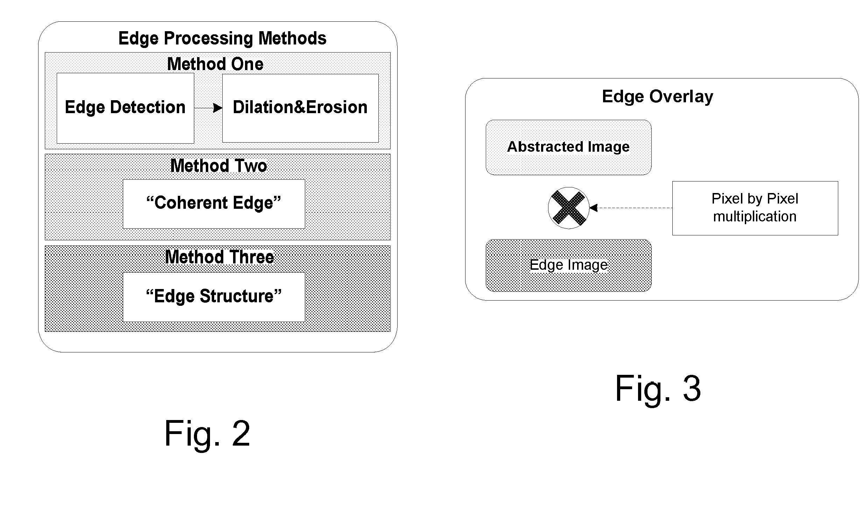

Fig. 2    exemplarily shows different edge processing methods and

Fig.3    shows edge overlay.

Exemplary embodiment

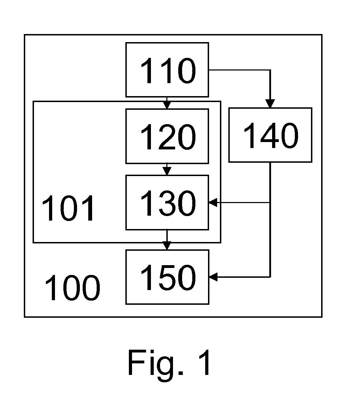

The exemplary embodiment of a method for non-photorealistic rendering 100 consists of five steps, as shown in Fig.1. Two of the four steps are related to edge processing 101.

In a first step 110, an iterative bilateral filter is applied to an input image for obtaining an abstracted video. The iterative bilateral filter has the attribute of preserving crisp edges. Then, edge processing 101 is performed. Edge processing 101 consists of a second step 120 and a third step 130. In the second step 120, edges detection is performed on the abstraction result. This is achieved by a Marr-Hildreth (M-H) algorithm which is implemented on a GPU directly by help of a separable Laplacian-of-Gaussian (LoG) operator. The second step 120 also comprises dilation and erosion to make edges more continuous. In the third step 130, the edge image obtained in the second step 120 and the abstraction result obtained in the first step 110 are combined into a combined image. The combination procedure is guided by a feature map generated in a fourth step 140 wherein the feature map is derived from a salience map and/or a skin-colour map generated from the original natural image. Finally, in the fifth step 150, the luminance of the combined image resulting from step 130 is quantized.

The steps 110, 120, 130 and 150 are explained in detail below.

Abstraction

In the first step 110, the target is removing small discontinuities while preserving crisp edges of the input image. In the exemplay embodiment of the inventive method, a bilateral filter is used for abstraction, and iteratively performed twice.

For an input image $I$ and output image $H$, the general form of bilateral filter could be defined as follows:

$$H(c,\Omega) = \frac{\sum_{a \in \Omega} f(P(a) - P(c)) g(I(a) - I(c)) I(a)}{\sum_{a \in \Omega} f(P(a) - P(c)) g(I(a) - I(c))}$$

$$(1)$$

In this formula, c is a pixel, a are the neighbouring pixels in window Q, $P(\cdot)$ returns the position of a pixel and $I(\cdot)$ returns a pixel's intensity value. $f(\cdot)$ is spatial filtering function and $g(\cdot)$ is intensity filtering function. Both functions are typically Gaussian.

The bilateral filter was implemented on a GPU, which greatly accelerates the filtering process.

Edge Detection

In the second step 120, edges are detected said edges being overlaid on the abstraction result later. Edge detection is a process of detecting high contrast locations.

It was found, that LoG algorithms which are deliberately implemented on GPUs, actually perform faster than Difference-of-Gaussian (DoG) algorithms. Furthermore, it was found that a LoG operator gives better abstraction result.

Therefore, the second step 120 comprises convolving the abstracted image with a LoG operator, which is defined as follows

$$L(c,\sigma) = \frac{1}{2\pi\sigma^2} (\sum_{a \in \Omega} \nabla^2 (e^{-\frac{1}{2}(\frac{E(P(a),P(c))}{\sigma})^2}) I(a)) \qquad (2)$$

In this formula, symbol $\nabla^2$ sums the second-order unmixed partial derivatives. After calculating the derivatives, we get

$$L(c,\sigma) = \frac{1}{2\pi\sigma^2} \sum_{a \in \Omega} (\frac{\Delta x^2 + \Delta y^2 - 2\sigma^2}{\sigma^4} e^{-\frac{(\Delta x)^2 + (\Delta y)^2}{2\sigma^2}} I(a)) \qquad (3)$$

wherein $\Delta x = x_c - x_a$ and $\Delta y = y_c - y_a$. From (3), one can figure out that LoG is separable, thus efficient implementation is possible.

Edge detection results in an edge image. It is a grayscale image, but appears like a binary image because the colour of edges is sharply different from the colour of non-edges. The edge image is subjected to morphological operators resulting in an improved edge image.

Morphological operation comprises dilation and erosion.

A dilation operator is used to make edges more continuous and thicker. And an erosion operator is applied for removing noise possibly introduced by the dilation operation.

Alternatively, a Coherent Edge or Edge Structure approach could be used in the edge detecting step to achieve different edge styles. Coherent Edge uses Edge Tangent Flow (ETF) to guide a DoG algorithm. Edge Structure derives edges from Gaussian scale space. It should be noted, that both Coherent Edge and Edge Structure result in improved edge images, directly. That is, Coherent Edge and Edge Structure generate edges with good coherence which makes the dilation and erosion step unnecessary.

Edge Overlay

In the third step 130 which is an edge overlay step, the improved edge image from the second step 120 is combined with the abstracted image. The operation of combination may be as simple as multiplying the images pixel by pixel. The overlaid edge on the abstracted image is crucial to cartoon-like effect.

However, if there are too many trivial edges overlaid to the abstracted image, the cartoon-like effect is affected and the result image looks not so esthetic. To solve this problem a feature map is used for guiding the combination, for instance by attenuating and/or intensifying the multiplication results in dependency on the saliency of the respective pixels.

Feature maps are grayscale or binary images that reflect a picture's special information, such as spatial activity, luminance, skin-colour, etc.

One specific feature map is a salience map, which is based on the human visual perceptual system. The salience map generally reflects which part of an image would be salient to a human. Salience maps may but not necessarily do coincide with ROI.

When human faces appear in the video, a skin-colour map is a mean for improving or substituting the salience map. However, in an image frame sequence of a video if skin-colour map is generated for every frame, there might be temporal incoherence resulting in flickering. One possible solution is to generate one skin-colour map every N frames (N is some pre-defined integer coefficient) to guide the stylization of many frames. And the other one is to track the skin-colour area.

In summary, skin-colour map and the salience map are combined (e.g. the union set) to be the feature map.

Skin-colour map

The skin-colour map can be determined as follows: Firstly, pixels for which chrominance values are within predefined intervals are determined. That is, those pixels which have a Cr value between 130 and 175 and a *Cb* value between 75 and 130 are assigned a value of 1 in a first stage image. Pixels, for which at least one of the chrominance values is outside the mentioned associated value range, are assigned a value of 0 in the first stage image. Thus, the first stage image is binary.

Then, density of the first stage image is regulated. This comprises application of dilation and erosion operator on the first stage image. A down sampled density map is generated from the result. Each entry in the down sampled density map corresponds to a 4x4-block in the first stage image and reflects the average pixel value in said 4x4-block. 4x4-blocks at the image border are set to 0 independent on the average pixel value. Each pixel is then classified as being of no density if none of the pixels in the 4x4-block it is belonging to fulfils the skin-colour condition mentioned above. If only some but not all pixels in the 4x4-block fulfil the skin-colour condition, the pixels in such block are classified as belonging to intermediate density. If all pixels in the 4x4-block fulfil the skin-colour condition, the pixels in such block are classified as belonging to full density.

Full density pixels in the resulting image which are not surrounded by at least three other full density pixels are then eroded. Pixels of no or intermediate density are dilated if they are surrounded by more than two full density pixels.

Subsequently, remaining pixels of intermediate density are set to no density. This results in a second stage image.

A down sampled standard deviation map is generated from the second stage image. Each entry in the down sampled standard deviation map corresponds to the standard deviation within an 8x8-block in the second stage image. For each pixel in the second stage image, then it is determined whether said pixel belongs to an 8x8-block with a standard deviation smaller than 2. If so, said pixel is set to be 0. Otherwise, said pixel is set to be 1. This results in a third stage image.

The third stage image is geometrically corrected. Pixels of value 1 in the third stage image which are surrounded by less than four other value 1 pixels are set to 0. And pixels of value 0 are set to 1 if they are surrounded by at least six value 1 pixels. Then, columns and rows of the image resulting from pixel setting are searched for pixel sequences of value 1 which are 3 pixels long or shorter. Pixels in sequences fulfilling this condition are set to 0.

This results in the skin-colour map.

Salience map

For establishing the salience map of the input image, the input image is filter with filters selective for different saliency causing features. Said saliency causing features comprise high intensity differences, intense colour opponency, fast motion, uniform motion and/or stereo disparity to name a few. Advantageously, corners and crossings are determined also. Feature selective filtering results in a feature specific map indicating the saliency of the pixels with respect to the corresponding feature. The feature selectively filtered images are than combined into the salience map. That is, each pixel is assigned with a saliency value ranging from 0 indicating no saliency to 1 indicating high saliency.

The establishing of the feature specific maps and/or the saliency map may comprise correction of pixels in dependency of their surrounding as described in the context of geometrical correction for achieving the skin-colour map.

Morphological operations as well as density corrections for achieving a more uniform feature specific maps and/or saliency map are preferably performed, too.

Establishing feature specific maps and/or the saliency map may comprise a competition scheme, for instance a winner-takes-all mechanism, singling out the most salient area in the respective map.

Saliency map and skin-colour map are combined into a feature map by treating the skin-colour map as another feature selectively filtered image which is combined with the feature selectively filtered image mentioned above.

In another exemplary embodiment saliency map and skin-colour map are combined by forming a weighted sum of the two maps.

In yet another exemplary embodiment saliency map and skin-colour map are used alternatively for guiding NPR rendering. That is, if in the input image a skin-coloured area is present and reaches or exceeds a predetermined size the skin-colour map guides the process. Otherwise, the saliency map guides it.

Guidance of edge overlay may be realized by help of a threshold. Only pixels with a saliency reaching or exceeding a given threshold are overlaid with edges. A threshold of 0.7 gave good results.

Quantization

In the fifth step 150, the luminance component of the edge-overlaid result is quantized. Quantization enhances cartoon-like effect. Within the exemplary embodiment an adaptive quantization under the guidance of the feature map is realised. In the regions of more visual importance, quantization is softer; while for regions of less visual importance, harder quantization is used.

**Claims**

1.  Method (100) for non-photorealistic rendering of an input image comprising

    - determining a feature map (140) of the input image;
    - edge processing (101) the input image under guidance of the feature map.

2.  Method (100) according to claim 1 wherein determining the feature map (140) comprises

    - determining a salience map;
    - determining a skin-colour map and
    - combining the salience map and the skin-colour map.

3.  Method (100) according to claim 1 or 2, the method further comprising

    - abstracting (110) the input image and
    - quantizing (140) a combined image under guidance of the feature map wherein
    - edge processing (101) comprises detecting edges (120) in the input images and forming the combined image by overlaying (130) the abstracted image and the edge detected image under guidance of the feature map.

4.  Method (100) according to claim 3, wherein abstracting (110) the input image comprises

    - applying a bilateral filter.

5.  Method (100) according to claim 3 or 4, wherein detecting edges (120) in the input image comprises

    - convolving the input image with a Laplacian-of-Gaussian operator;
    - dilating the convolved input image and
    - eroding the dilated input image.

6.  Method (100) according to claim 3 or 4, wherein detecting edges (100) in the input image comprises

    - determining edge tangent flow and
    - applying a Difference-of-Gaussian operator under guidance of the determined edge tangent flow.

7.  Method (100) according to claim 3 or 4, wherein detecting edges (120) in the input image comprises

    - deriving edges from Gaussian scale space.

8.  Method (100) according to any of the claims 3 to 7, wherein overlaying (130) the abstracted image and the edge detected image comprises

    - multiplying a pixel value in the abstracted image with the value of the respective pixel in the edge detected image.

9.  Method (100) according to any of the preceding claims, wherein determining the feature map (140) comprises

    - filtering the input image with a filter selectively for a first feature;
    - filtering the input image with a filter selectively for a second feature and
    - combining the filtering results.

10. Method (100) according to any of the preceding claims, wherein determining the feature map (140) comprises

    - determining a first stage image by determining for pixels in the input image whether their chrominance values are within predefined intervals;
    - regulating density and luminance of the first stage image and

- geometrically correcting the regulated image.

Fig. 1

**Edge Processing Methods**

**Method One**

| Edge Detection | → | Dilation&Erosion |

**Method Two**

"Coherent Edge"

**Method Three**

"Edge Structure"

Fig. 2

**Edge Overlay**

Abstracted Image

✖ ◀----- Pixel by Pixel multiplication

Edge Image

Fig. 3

European Patent
Office

**EUROPEAN SEARCH REPORT**

Application Number

EP 07 30 1342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WINNEMOELLER H ET AL: "Real-Time Video Abstraction" SIGGRAPH CONFERENCE PROCEEDINGS, 3 July 2006 (2006-07-03), pages 1221-1226, XP009095605 | 1-4,8-10 | INV. G06T5/00 G06T11/00 |
| Y | * abstract * section 1 Introduction section 3 Method ----- | 5-7 | |
| Y | KANG H., LEE S., CHUI C.K.: "Coherent Line Drawing" 5TH INTERNATIONAL SYMPOSIUM ON NON-PHOTOREALISTIC ANIMATION AND RENDERING, 4 August 2007 (2007-08-04), pages 43-50, XP002469944 * abstract * * page 43, right-hand column, line 2 - line 12 * * page 44, left-hand column, last paragraph - page 45, right-hand column, paragraph 1 * * page 46, left-hand column, line 1 - page 47, right-hand column, line 13; figures 1-12 * ----- -/-- | 6 | |
| | | | TECHNICAL FIELDS SEARCHED (IPC) G06T |

The present search report has been drawn up for all claims

| Place of search | Date of completion of the search | Examiner |
|---|---|---|
| Munich | 21 February 2008 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 30 1342

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BOSWORTH J H ET AL: "Morphological image segmentation by local monotonicity" SIGNALS, SYSTEMS, AND COMPUTERS, 1999. CONFERENCE RECORD OF THE THIRTY-THIRD ASILOMAR CONFERENCE ON OCT. 24-27, 1999, PISCATAWAY, NJ, USA,IEEE, US, vol. 1, 24 October 1999 (1999-10-24), pages 53-57, XP010373946 ISBN: 0-7803-5700-0 * abstract * * page 55, left-hand column, last paragraph - right-hand column, line 14 * * page 56, left-hand column, last paragraph - right-hand column, last line * * figures 4-7 * ----- | 5,7 | |
| A | ITTI L., KOCH C.: "Computational modelling of visual attention" NATURE REVIEWS, NEUROSCIENCE, vol. 2, no. 3, 31 March 2001 (2001-03-31), pages 194-203, XP002469945 * page 198, left-hand column, line 23 - right-hand column, line 3 * ----- | 1-3,9 | TECHNICAL FIELDS SEARCHED (IPC) |

The present search report has been drawn up for all claims

| Place of search | Date of completion of the search | Examiner |
|---|---|---|
| Munich | 21 February 2008 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document